# EUROPÄISCHE PATENTSCHRIFT

(11) **EP 2 632 768 B1**
(45) Veröffentlichungstag und Bekanntmachung des Hinweises auf die Patenterteilung: **29.10.2014**
(21) Anmeldenummer: 11757309.7
(22) Anmeldetag: 14.09.2011
(51) Int. Cl.: B60R 16/027, B62D 1/16

(54) **LENKEINRICHTUNG FÜR KRAFTFAHRZEUGE**
STEERING DEVICE FOR MOTOR VEHICLES
DISPOSITIF DE DIRECTION POUR VÉHICULES AUTOMOBILES

(30) Priorität: 29.10.2010 DE 102010043120
(43) Veröffentlichungstag der Anmeldung: 04.09.2013
(73) Patentinhaber: Bayerische Motoren Werke Aktiengesellschaft, 80809 München (DE)
(72) Erfinder: SKOWRONEK, Alexander, 83620 Feldkirchen-Westerham (DE); LIESS, Helmar, 80995 München (DE)
(86) Internationale Anmeldenummer: PCT/EP2011/065948
(87) Internationale Veröffentlichungsnummer: WO 2012/055632

(56) Entgegenhaltungen:
- DE-A1- 19 900 083
- DE-A1- 19 924 752
- DE-A1-102008 021 973
- DE-A1-102009 023 527
- JP-A- 50 041 232

## Beschreibung

Die Erfindung betrifft eine Lenkeinrichtung für ein Kraftfahrzeug, nach dem Oberbegriff des ersten Anspruchs, mit einem Lenkrad, das drehfest mit einer durchgehend hohlen Lenkwelle verbunden ist, durch die mindestens ein elektrischer Leiter zur elektrischen Anbindung lenkradseitiger Steuereinrichtungen geführt ist. Insbesondere betrifft dies eine Lenkeinrichtung der Flexible-Steering-Concept, FSC-Bauart, ohne mechanischen Durchtrieb zwischen einem Lenkrad und einem Lenkgetriebe, mit einer hydraulischen Rückfallebene aus einer an das Lenkrad gekoppelten Hydraulik-Förderein-heit, sowie einer an das Lenkgetriebe gekoppelten Hydraulik-Stelleinheit, über welche im Versagensfall auch ein über das Lenkrad vorgegebener Rad-Lenkeinschlag hergestellt werden kann. Zum bekannten Stand der Technik, was die FSC-Bauart betrifft, wird auf die DE 10 2008 021 973 A1 verwiesen. Eine Lenkeinrichtung gemäß dem Oberbegriff des ersten Anspruchs ist in dem deutschen Gebrauchsmuster Nr. 1 698 768 offenbart.

Die sogenannten FSC-Systeme, bei denen der vom Fahrer eines Fahrzeugs am Lenkrad oder dergleichen (anstelle eines Lenkrads kann auch ein sog. Sidestick oder anderes als Lenkhandhabe vorgesehen sein - im Weiteren wird der Einfachheit halber nur vom Lenkrad gesprochen) eingestellte Lenkwunsch den lenkbaren Fahrzeugrädern nicht auf direktem mechanischen Wege, nämlich wie im oben genannten Gebrauchsmuster und bei den heute üblichen Fahrzeugen, und über die sog. Lenksäule oder Lenkwelle, sowie ein daran gekoppeltes Lenkgetriebe (bspw. Zahnstangenlenkgetriebe) übermittelt wird, sondern auf elektrischem oder hydraulischem Weg, sind hinsichtlich der Anordnungsmöglichkeiten für die Systembestandteile im Fahrzeug vorteilhaft. Da jedoch ein Aktuator, der, angesteuert von Signalen der Lenkradvorgabe, die lenkbaren Räder verschwenkt, ausfallen kann, ist eine sogenannte Rückfallebene vorzusehen, welche im Hinblick auf eine erwünschte Bauraum-Flexibilität zumeist hydraulisch ausgebildet ist und die die Merkmale, eine an das Lenkrad gekoppelte Hydraulik-Fördereinheit, sowie eine an das genannte Lenkgetriebe gekoppelte Hydraulik-Stelleinheit, sowie einen diese beiden Einheiten hydraulisch miteinander verbindenden Hydraulikkreis, aufweist.

Weiterhin benötigt ein FSC-System einen sogenannten Lenkmoment-Simulator, mit Hilfe dessen an das Lenkrad ein dem vom Fahrer aufgebrachten Lenkmoment entgegen gerichtetes Moment angelegt werden kann, um dem Fahrer ein übliches Lenkgefühl und somit quasi einen haptischen Kontakt zur Fahrbahn zu vermitteln. Insbesondere ist auch ein Endanschlag für die Drehbewegung des Lenkrads vorzusehen, welcher dem maximalen Einschlagwinkel der lenkbaren Fahrzeugräder entspricht. Dieser Endanschlag wird üblicherweise durch den genannten Lenkmoment-Simulator dargestellt, indem ein diesen bildender Elektromotor bei Erreichen des Endanschlags ein derart hohes Gegenmoment zum vom Fahrer aufgebrachten Lenkmoment an das Lenkrad anlegt, dass der Fahrer das Lenkrad nicht weiter verdrehen kann.

Zum Stand der Technik gehören auch flexible Leiterbahnen, hochflexible Kabel und Flachleiterbandleitungen, die sich zwischen bewegten Elementen mit elektrischen Anschlüssen als flexible Übertragungsmittel für elektrischen Strom bereits bewährt haben. Der Inhalt von DE 10 2005 016 676 A1 und EP 1 713 096 B1, die solche Leiter beschreiben, soll somit, in dem für die Erfindung erforderlichen Umfang zum bekannten Stand der Technik gehörend, auch hier als offenbart gelten.

Des Weiteren offenbaren die DE 199 00 083 A1 und die JP 50 041232 A zusammen eine Lenkeinrichtung für ein Kraftfahrzeug mit einem Lenkrad, das drehfest mit einer durchgehend hohlen Lenkwelle verbunden ist, durch die mindestens ein elektrischer Leiter zur elektrischen Anbindung lenkradseitiger Ausrüstung geführt ist, wobei der Leiter in axialer Richtung durch die gesamte Lenkwelle geführt ist, an beiden Enden der Lenkwelle aus dieser austritt, im Wesentlichen von einer Schutzeinrichtung umgeben ist, am lenkradabgekehrten Ende der Schutzeinrichtung durch ein sich nicht mit der Lenkwelle drehendes Endmodul gehalten wird und am lenkradzugekehrten Ende der Schutzeinrichtung durch ein sich mit der Lenkwelle mit drehendes, weiteres Endmodul gehalten wird. Dabei ist der elektrische Leiter in der DE 199 00 083 A1 nicht von einer separaten Schutzeinrichtung umgeben. In der JP 50 041232 A drehen sich Schutzeinrichtung und Pralltopf des Lenkrads beim Lenken nicht mit, sondern nur der Lenkradkranz mit der Lenkwelle. Lenkradkranz und Lenkradtopf mit Schutzeinrichtung sind mittels eines Lagers 21 gegeneinander verdrehbar, so dass beim Lenken nur der Lenkradkranz dreht und somit der elektrische Leiter keiner Verwindung unterworfen ist.

Durch direkt am Lenkrad platzierte Bedienelemente und Sicherheitsvorrichtungen, wie zum Beispiel ein Airbag, ist es notwendig, Informationen und Leistung elektrisch von feststehenden Fahrzeugteilen in das drehbare Lenkrad und zurück zu übertragen. Dies muss möglich sein, während das Lenkrad aus seiner Mittelstellung heraus zum Einschlagen der Räder bis zu den vorgegebenen Lenkanschlägen verdrehbar bleiben muss, mit mehreren Umdrehungen in jede Richtung. Dabei ist die Funktion bei Leichtgängigkeit, Geräuscharmut und mit geringen Kosten über die gesamte Lebensdauer des Kraftfahrzeugs sicher zu stellen und zwar mindestens für eine, aber gewöhnlich für eine große Anzahl an, elektrische(n) Leitung(en) mit einem Querschnitt für Stromstärken bis 8 Ampere. Zum Beispiel kann es leicht nötig sein, 16 elektrische Leitungen ins Lenkrad zu führen. Des Weiteren besitzen die meisten Fahrzeuge ein einstellbares Lenkrad mit Höhen- und Längenverstellung, die Längenverstellung verändert den Abstand zum Fahrer hin. Dazu kann die Lenksäule teleskopierbar ausgebildet sein. Außerdem sollen der erforderliche Einbauraum minimiert und der Montageprozess einfach gestaltet sein, bei zuverlässigem, schnellem Ein- und Ausbau im Kraftfahrzeug.

Dies bedingt die Aufgabe der Erfindung, eine Lenkeinrichtung und ein Verfahren zur elektrischen Anbindung lenkradseitiger Ausrüstung bereit zu stellen, die, aufbauend auf dem genannten Stand der Technik, vorstehende Anforderungen erfüllen können.

Die Aufgabe wird erfindungsgemäß mit den Merkmalen der unabhängigen Ansprüche gelöst. Vorteilhafte Aus- und Weiterbildungen sind Inhalt der abhängigen Ansprüche.

Nach der Erfindung ist eine Lenkeinrichtung für ein Kraftfahrzeug mit einem Lenkrad, das drehfest mit einer durchgehend hohlen Lenkwelle verbunden ist, durch die mindestens ein elektrischer Leiter zur elektrischen Anbindung lenkradseitiger Ausrüstung geführt ist, wobei der Leiter in axialer Richtung durch die gesamte Lenkwelle geführt ist, an beiden Enden der Lenkwelle aus dieser austritt, im Wesentlichen von einer Schutzeinrichtung umgeben ist, am lenkradabgekehrten Ende der Schutzeinrichtung durch ein sich nicht mit der Lenkwelle drehendes Endmodul gehalten wird und am lenkradzugekehrten Ende der Schutzeinrichtung durch ein sich mit der Lenkwelle mit drehendes, weiteres Endmodul gehalten wird, dadurch gekennzeichnet, dass die Schutzeinrichtung in ihrer Länge durch teleskopartiges Ein- und Ausfahren veränderbar ist, indem sie aus einem äußeren- und einem inneren zweier teleskopartig, mit jeweils ihrem aneinander angrenzenden Ende, in axialer Richtung ineinander verschiebbar gelagerten Schutzrohren besteht und dass, die Rohre der Schutzeinrichtung in axialer- und in Umfangsrichtung, reib- und/oder formschlüssig aneinander festlegbar sind.

Das hat den Vorteil, dass die elektrische Anbindung, bei radial extrem kleinem Bauraumbedarf, in axialer Richtung genügend lang gestaltet werden kann, was ein Versagen der elektrischen Anbindung aufgrund der über die gewöhnliche Nutzungszeit eines Kraftfahrzeugs auftretenden Spannungsbeanspruchung der Leiter durch die Lenkraddrehung verhindert. Denn diese Beanspruchung, aufgrund der Drehbarkeit des Lenkrads um drei bis fünf Umdrehungen, vermindert sich für die mittig in der Lenkwelle verlaufenden Leiter umso mehr, je länger die Leiter gewählt werden können. Aufgrund der Länge und Form der Leiter und der längsverstellbaren Schutzeinrichtung kann auch eine teleskopartige Verstellung der Lenksäule stattfinden. Außerdem sind die Leiter in der hohlen Lenkwelle geschützt untergebracht, bei gleichzeitiger Inanspruchnahme von für andere Verwendung nicht benötigtem Raum in der Lenkwelle. Im Vergleich mit einer konventionellen Wickelfederkassette werden Kosten und Bauraum eingespart und auch die Designfreiheit im oberen Lenkradbereich vergrößert.

Ein weiterer Vorteil ist, dass die längenverstellbare Schutzeinrichtung einfach ausgebildet und herzustellen ist, zum Beispiel aus Kunststoff. Außerdem ist es auf einfache Weise möglich, eine Transportsicherung ohne weitere Teile zu verwirklichen, die ein Verdrehen der beiden Rohre bei einer vormontierten Baueinheit, zum Beispiel in Mittelstellung für Geradeausfahrt, zueinander verhindert. Eine solche vormontierte Baueinheit kann wenigstens aus einem Endmodul, einem weiteren Endmodul, dem Leiter mit elektrischen Verbindern und der die Endmodule verbindenden Schutzeinrichtung bestehen, aus zwei in axialer Richtung teleskopisch ineinander einschiebbaren, durch eine Verdreh- und Verschiebesicherung aneinander festgelegten Rohren. Durch die Verdrehsicherung im Anlieferzustand wird eine unkontrollierte Verdrehung des Spiralkabels mit den Leitern vermieden, was mögliche Schäden am Kabel vor und nach dem Einbau verhindert. Die Rohre der Schutzeinrichtung können reib- und/oder formschlüssig aneinander festlegbar sein, zum Beispiel durch einen Bajonettverschluss oder durch eine Kerbverzahnung in Umfangsrichtung, kombiniert mit mindestens einer Rastnocke, insbesondere einem Rastbund, in axialer Richtung. Wenn die reib- und/oder formschlüssige Verbindung der Rohre der Schutzeinrichtung mindestens von einem lenkradseitigen Ende eines Rohres aus manuell lösbar ist, hat das den Vorteil, dass die Montage bzw. Demontage der zentralen Kabeleinheit in der Lenksäule aufgrund der Arretierungsmöglichkeit besonders einfach und auch leicht wiederholt ausführbar ist.

Die tordierbare Länge des Leiters kann größer gewählt werden als die Länge der Lenkwelle, indem die Länge des Leiters zwischen den beiden Endmodulen größer ist als deren Abstand voneinander. Dies kann dadurch erreicht werden, dass der Leiter in axialer Richtung wenigstens innerhalb der Lenkwelle spiralförmig und/oder gewellt und/oder zieharmonikaförmig und/oder helixförmig und/oder bandförmig, und/oder als Einzelkabel ausgeführt ist. Über die Endmodule kann der Leiter in dem abgeschlossenen Schutzgehäuse auf einfache Weise in seiner Lage fixiert werden. Dabei ist es zum Verbinden des Leiters mit seinen korrespondierenden Anschlüssen am Lenkrad und fahrzeugseitig von Vorteil, wenn an den Enden des Leiters Leitungsverbinder angebracht sind. Diese können Steckverbinder sein. Um Steckverbinder mit den Leitern in die Lenkwelle einführen zu können, müssen diese alle durch die Lenkwelle bzw. durch die Schutzeinrichtung hindurch passen, was bei gleichzeitig möglichst groß dimensionierten Steckverbindern günstig erreicht werden kann, wenn die Leiter mit mehreren elektrischen Steckverbindern versehen sind, die entlang der Leiter axial versetzt so angeordnet sind, dass sie einzeln hintereinander liegen. Weiterhin können mehrere Leiter elektrisch voneinander isoliert auf einem Leiterträger untergebracht sein und dieser kann zum Beispiel als flexible Leiterbahne und/oder hochflexibel und/oder als Flachleiterbandleitung ausgeführt sein. Es können auch mehrere solche Leiterträger mit elektrisch isolierten Leitern miteinander wenigstens in der Lenkwelle, zum Beispiel übereinander liegend, untergebracht sein. Dabei ist es vorteilhaft, wenn ein oder beide Endmodule den Leiter bzw. die Leiterträger wenigstens in axialer Richtung, insbesondere aber auch in radialer Richtung, festlegen.

Für eine Lenkeinrichtung, die dadurch gekennzeichnet ist, dass sie keine mechanische Triebverbindung zwischen dem Lenkrad und einem Lenkgetriebe aufweist, insbesondere wenn das Lenkgetriebe von einem mit Ausgangssignalen aus der Lenkradbetätigung angesteuerten Aktuator beaufschlagt wird, ist eine solche Anordnung wenigstens eines Leiters in der Lenkwelle besonders von Vorteil. Es kann so besonders einfach und Kosten sparend eine elektrisch gesteuerte Lenkung eines flexiblen Lenkungskonzepts, FSC (Flexible Steering Concept), verwirklicht werden, bei dem das Lenkgetriebe an eine Hydraulik-Stelleinheit gekoppelt ist, die von einer vom Lenkrad gesteuerten Hydraulik-Fördereinheit beaufschlagt wird und über eine im Hydraulikkreis einschaltbare hydraulische Verbindung zwischen der Hydraulik-Fördereinheit und der Hydraulik-Stelleinheit eine Rückfallebene zur Lenkungsbetätigung bei Ausfall des Aktuators bildet.

Für eine einfache und zuverlässige Montage vorteilhaft sind Ausführungsformen der Lenkeinrichtung, bei denen eine Baueinheit vormontierbar gestaltet ist, wenigstens bestehend aus Endmodul, weiterem Endmodul, Schutzeinrichtung und Leiter, insbesondere noch mit Steckverbindern. Vom vormontierten Zustand in den montierten Zustand im Kraftfahrzeug ist dann so eine Baueinheit ohne Weiteres zu überführen, wenn sie die Verdrehsicherung besitzt, die die Position des Endmoduls zu der des weiteren Endmoduls wenigstens in Verdrehrichtung und insbesondere im Wesentlichen in einer Mittelstellung, bezogen auf ein Torsionsvermögen des Leiters in beide Richtungen, einer Geradeausfahrstellung des Lenkrads, festlegt. Diese Mittelstellung gewährleistet, dass der Leiter auf jeden Fall in beide Richtungen mit dem Lenkrad bis zu dessen Anschlag verdreht werden kann. Vorteilhafterweise können dazu die beiden Rohre in Umfangsrichtung zueinander festlegbar sein.

Für die Montage der vormontierten Baueinheit fahrzeugseitig und des Lenkrads ist es von Vorteil wenn die elektrischen Anschlussverbindungen automatisch beim Anbringen erzeugt werden, indem die Steckverbinder fahrzeug- bzw. lenkradseitig die Verbindung vom Leiter zu den Anschlüssen im Fahrzeug bzw. Lenkrad herstellen, insbesondere beim Einbringen der vormontierten Baueinheit in die Lenkwelle, wenn das Endmodul fahrzeugfest festgelegt wird und beim Aufstecken des Lenkrads, wenn das weitere Endmodul mit der Lenkwelle drehfest verbunden wird.

Die Erfindung besteht auch aus einem Verfahren zur elektrischen Anbindung lenkradseitiger Ausrüstung in einer Lenkeinrichtung eines Kraftfahrzeugs, mit einer durchgehend hohlen Lenkwelle, durch die mindestens ein elektrischer Leiter geführt wird, insbesondere eine flexible Leiterbahne und/oder hochflexible Kabel und/oder Flachleiterbandleitungen, in einer vormontierten Baueinheit, wenigstens bestehend aus einem Endmodul, einem weiteren Endmodul, dem Leiter mit elektrischen Verbindern und einer die Endmodule verbindenden, aus zwei in axialer Richtung teleskopisch ineinander einschiebbaren, durch eine Verdreh- und Verschiebesicherung aneinander festgelegten Rohren bestehenden Schutzeinrichtung, gekennzeichnet durch mindestens folgende Montageschritte:
- Einführen der vormontierten Baueinheit mit aneinander festgelegten Rohren in axialer Richtung in die hohle Lenkwelle bis das Endmodul durch Formschluss fahrzeugfest platziert ist,
- lösen der Verdreh- und Verschiebesicherung zwischen den beiden Rohren der Schutzeinrichtung,
- teleskopisches Zusammenschieben der Schutzeinrichtung bis auf Anschlag am Lenkradboden und lenkradfestes Festlegen des weiteren Endmoduls,
- elektrisches Kontaktieren der elektrischen Verbinder mit Ihren korrespondierenden Anschlüssen.

Besondere Ausführungsformen des Verfahrens können vorteilhafterweise einzelne gegenständliche Erfindungsmerkmale, wie vorstehend erläutert, beinhalten. Ein besonders vorteilhaftes Verfahren ist zum Beispiel dadurch gekennzeichnet, dass die elektrischen Verbinder am Fahrzeug zu den korrespondierenden elektrischen Verbindern am Endmodul der vormontierten Baueinheit so ausgerichtet festgelegt sind, dass deren elektrische Verbindung zeitgleich mit der Herstellung des Formschlusses am Endmodul automatisch beim Einführen der vormontierten Baueinheit in die hohle Lenkwelle hergestellt wird.

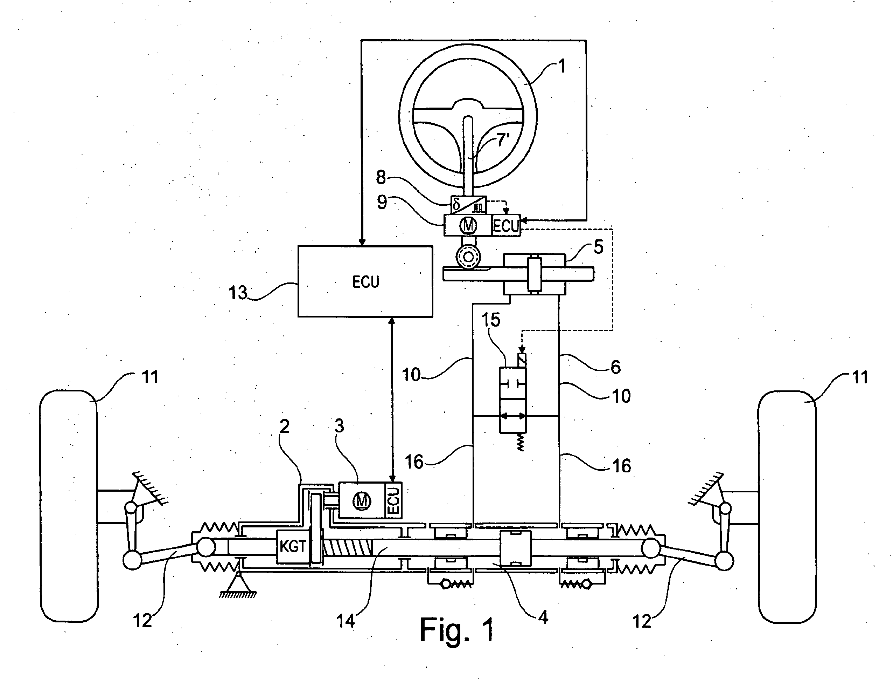

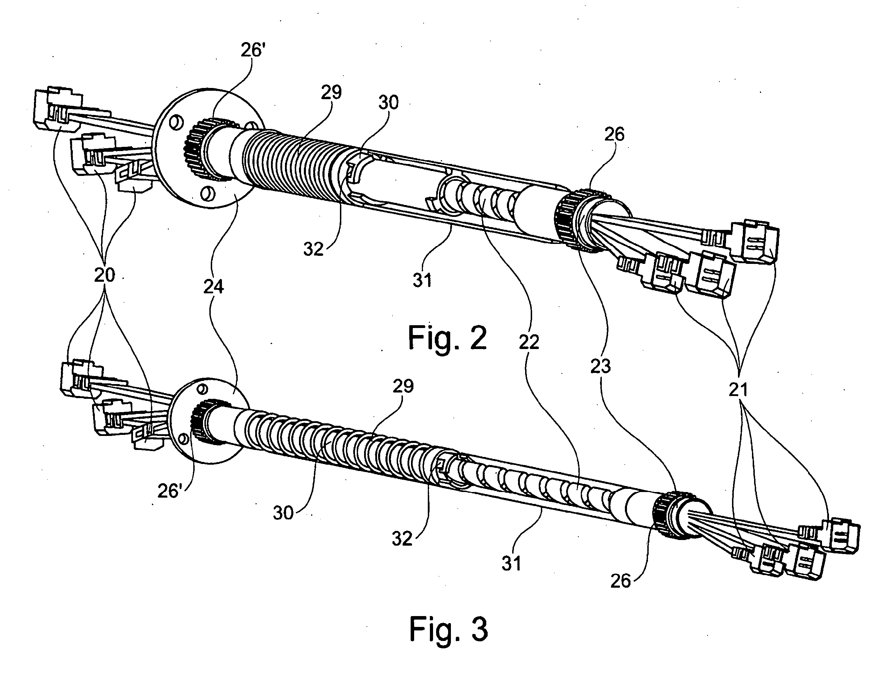

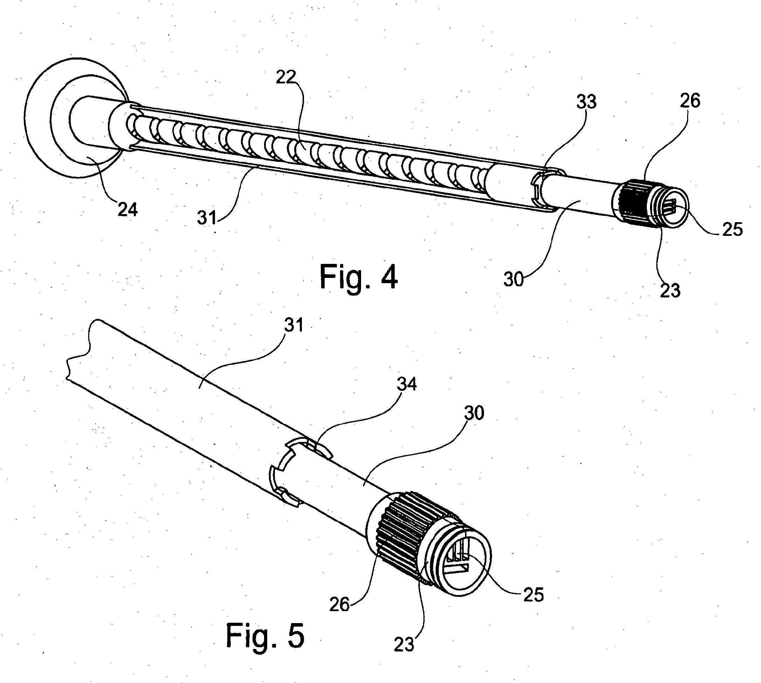

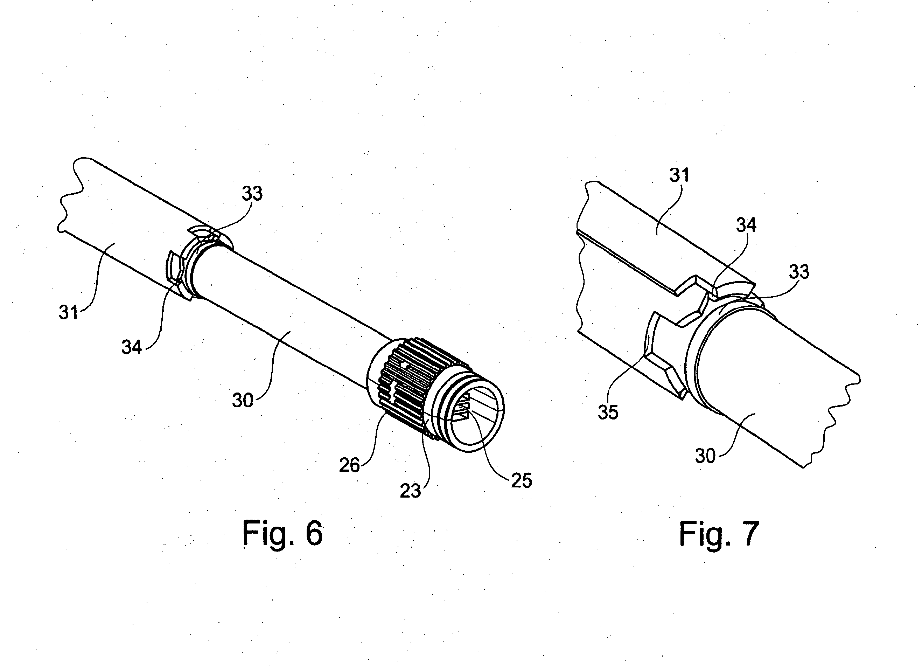

Die folgende Beschreibung zeigt in **Figur 1** ein Ausführungsbeispiel einer FSC-Lenkung nach dem Stand der Technik, ausgerüstet mit einer Lenkwelle nach dem Stand der Technik. Das Innere einer hohlen Lenkwelle einer erfindungsgemäßen Lenkeinrichtung, eine zentrale Kabeleinheit, unter anderem zum Einsatz in einer FSC-Lenkung, ist in den **Figuren 2 bis 4** in zwei Ausführungsformen, räumlich und teilweise geschnitten in verschiedenen Maßstäben dargestellt. Die **Figuren 5 bis 7** zeigen Teilvergrößerungen aus Figur 4, der zweiten Ausführungsform. Gleiche Elemente sind mit den gleichen Bezugsziffern bezeichnet.

Eine FSC-Lenkung (Flexible-Steering-Concept) nach dem Stand der Technik entsprechend Figur 1 ist eine Lenkung ohne mechanische Triebverbindung zwischen einem Lenkrad 1 und einem Lenkgetriebe 2, das von einem mit Ausgangssignalen aus der Lenkradbetätigung angesteuerten Aktuator 3 beaufschlagt wird und das an eine Hydraulik-Stelleinheit 4 gekoppelt ist, die von einer vom Lenkrad 1 gesteuerten Hydraulik-Fördereinheit 5 beaufschlagt wird und über eine im Hydraulikkreis 6 einschaltbare hydraulische Verbindung zwischen der Hydraulik-Fördereinheit 5 und der Hydraulik-Stelleinheit 4 eine Rückfallebene zur Lenkungsbetätigung bei Ausfall des Aktuators 3 bildet.

Das von einem Fahrer eines Fahrzeugs zu betätigende Lenkrad 1 ist verdrehfest mit einer Lenkwelle 7' verbunden. Diese ist mit einem Drehwinkelsensor 8 ausgestattet, mit dem der vom Fahrer mit seinem Lenkrad 1 vorgegebene Lenkwinkel erfasst werden kann. Des Weiteren ist ein auf die Lenkwelle 7 einwirkender Lenkmoment-Simulator 9 als Elektromotor ausgebildet. Schließlich ist an dem dem Lenkrad 1 gegenüberliegenden Ende der Lenkwelle 7' die Hydraulik-Fördereinheit 5 in Form einer Gleichgang-Zylinder-Kolben-Einheit vorgesehen. Durch diese wird mit einer Drehbewegung des Lenkrads 1, je nach Drehrichtung, eine HydraulikFlüssigkeit in einem lenkradseitigen Teil 10 des Hydraulikkreises 6 nach der einen oder anderen Seite gefördert, das heißt in eine der beiden jeweils mit der Bezugsziffer 10 gekennzeichneten Hydraulik-Leitungen.

Die beiden lenkbaren Räder 11 des zweispurigen Fahrzeugs sind in grundsätzlich bekannter Weise über Spurhebel und Spurstangen 12 verschwenkbar und somit lenkbar, wobei diese Spurstangen 12 an eine quer zur Fahrzeuglängsrichtung verlagerbare Kolbenstange 14 des Lenkgetriebes 2 angelenkt sind. Dieses Lenkgetriebe 2 ist mittels des elektromotorischen Aktuators 3 derart betätigbar bzw. beaufschlagbar, dass die gewünschte Verschwenkbewegung der lenkbaren Räder 11 initiiert wird. In diesem Sinne wird der genannte Aktuator 3, genauer ein Elektromotor desselben, von einer elektronischen Steuereinheit 13 anhand der Signale des mit dem Lenkrad 1 verbundenen Drehwinkelsensors 8, welcher eine Lenkvorgabe des Fahrers wiedergibt, angesteuert. Dabei wird der elektronischen Steuereinheit 13 die Position der Kolbenstange 14 des Lenkgetriebes 2 übermittelt.

Falls der elektromotorische Aktuator 3 und insbesondere der Elektromotor desselben ausfallen sollte, muss das Fahrzeug weiterhin lenkbar sein, wofür eine sogenannte Rückfallebene, vorgesehen ist, die unter anderem durch den bereits genannten lenkradseitigen Teil 10 eines Hydraulikkreises 6, sowie einen über ein sogenanntes Fail-Safe-Ventil 15 mit diesem geeignet verbindbaren lenkgetriebeseitigen Teil 16 des Hydraulikkreises 6 gebildet wird, der seinerseits auf die hydraulische Stelleinheit 4 einwirkt, welche durch das Lenk-Getriebe 2 selbst gebildet ist. Es kann der lenkgetriebeseitige Teil 16 des Hydraulikkreises 6 über die Hydraulik-Stelleinheit 4 derart auf das Lenkgetriebe 2 einwirken, dass bei Verbindung des lenkradseitigen Teils 10 mit dem lenkgetriebeseitigen Teil 16 des besagten Hydraulikkreises 6 die lenkbaren Räder 11 entsprechend der Lenkvorgabe am Lenkrad 1 gelenkt werden. Im Sinne einer Herstellung oder Aktivierung der Rückfallebene können die beiden genannten Teile 10, 16 des Hydraulikkreises 6 über das Fail-Safe-Ventil 15 geeignet miteinander verbunden werden, wobei das Fail-Safe-Ventil 15 so gestaltet ist, dass es im nicht bestromten Zustand die Verbindung zwischen den beiden Teilen 10, 16 des Hydraulikkreises 6 und somit auch eine hydraulische Verbindung zwischen der Hydraulik-Fördereinheit 5 und der Hydraulik-Stelleinheit 4 herstellt.

Insbesondere eine solche Lenkeinrichtung kann eine erfindungsgemäß durchgehend hohle Lenkwelle besitzen, in deren Mitte eine zentrale Kabeleinheit nach der Erfindung eingebaut wird bzw. verläuft, entsprechend den Figuren 2 bis 7, wobei durch die Lenkwelle zum Beispiel sechs Signalleitungen zur Ansteuerung von Lenkradairbags, sechs Signalleitungen für weitere lenkradseitigen Ausrüstung und für eine Lenkradheizung zwei Leitungen geführt sind. Für jede dieser drei Gruppen von Anschlüssen ist zur elektrischen Anbindung auf jeder Seite der in den Figuren 2 bis 7 nicht dargestellten, die dargestellte zentrale Kabeleinheit umgebenden, Lenkwelle jeweils ein elektrischer Steckverbinder 20, 21 vorhanden. Die Leitungen 22 erstrecken sich am lenkradabgekehrten Ende der Lenkwelle durch ein sich nicht mit der Lenkwelle drehendes Endmodul 23 und am lenkradzugekehrten Ende der Lenkwelle durch ein sich mit der Lenkwelle mit drehendes, weiteres Endmodul 24 und sind in diesen Endmodulen 23, 24 in axialer und radialer Richtung fixiert (Figuren 2 und 3). Die drei Steckverbinder 21 am lenkradabgekehrten Ende der Leitungen 22 sind so gestaltet, dass sie am lenkradzugekehrten Ende in die Lenkwelle eingeschoben werden können. Dazu sind sie entlang der Leitungen 22 axial versetzt so angeordnet, dass sie hintereinanderliegend mit den Leitungen 22 durch die Lenkwelle hindurch passen. Die Leitungen 22 können auch im Endmodul 23 über ihren Steckverbinder 25 in axialer und radialer Richtung so fixiert sein dass die elektrische Verbindung automatisch beim Einführen der zentralen Kabeleinheit in die Lenkwelle aufgebaut wird (Figuren 4 bis 6). In einem Verfahren zur elektrischen Anbindung lenkradseitiger elektrischer Ausrüstung in einer Lenkeinrichtung eines Kraftfahrzeugs mit einer durchgehend hohlen Lenkwelle, durch die eine vormontierte Baueinheit mit Flachleiterbandleitungen 22 geführt wird und die außerdem noch aus einem Endmodul 23, einem weiteren Endmodul 24, elektrischen Verbindern und einer die Endmodule 23, 24 verbindenden, aus zwei in axialer Richtung teleskopisch ineinander einschiebbaren, durch eine Verdreh- und Verschiebesicherung aneinander festlegbaren Rohren 30, 31 bestehenden Schutzeinrichtung besteht, können dann folgende Montageschritte nacheinander zur Anwendung kommen:
- Einführen der vormontierten Baueinheit mit aneinander festgelegten Rohren 30, 31 in axialer Richtung in die hohle Lenkwelle bis das Endmodul 23 durch Formschluss fahrzeugfest platziert ist,
- manuelles Lösen der Verdreh- und Verschiebesicherung zwischen den beiden Rohren 30, 31 der Schutzeinrichtung vom lenkradseitigen Ende des Rohres 31 aus durch Entriegeln eines Bajonettverschlusses 32 (Fig. 2, 3) oder durch Überdrücken einer Rastnocke 33 am Rohr 30 mit einer Rastnase 34 am Rohr 31 (Fig. 4 bis 7).
- teleskopisches Zusammenschieben der Rohre 30, 31 der Schutzeinrichtung bis auf Anschlag am Lenkradboden, darauf lenkradfestes Festlegen des weiteren Endmoduls 24 und
- elektrisches Kontaktieren der elektrischen Verbinder 20, 21 mit Ihren korrespondierenden Anschlüssen.

Alternativ können die elektrischen Verbinder am Fahrzeug zu den korrespondierenden elektrischen Verbindern 25 am Endmodul 23 der vormontierten Baueinheit so ausgerichtet festgelegt sein, dass deren elektrische Verbindung zeitgleich mit der Herstellung des Formschlusses am Endmodul 23 automatisch beim Einführen der vormontierten Baueinheit in die hohle Lenkwelle hergestellt wird. Bei der Herstellung des Formschlusses kommt je eine Verzahnung 26 bzw. 26' als radiale Verdrehsicherung am Endmodul 23 bzw. am weiteren Endmodul 24 mit einer entsprechenden Gegenverzahnung fahrzeugseitig bzw. lenkradseitig bei der Montage der zentralen Kabeleinheit in Eingriff. Die Leitungen 22 sind von je einem mit dem Endmodul 23 bzw. mit dem weiteren Endmodul 24 fest verbundenen Rohr 30 bzw. weiteren Rohr 31 umgeben, die bei der Montage als Bestandteil der zentralen Kabeleinheit von der Lenkradseite her in die Lenkwelle eingeschoben werden. Der elektrische Verbinder 25, der am lenkradabgekehrten Ende des Leiters befestigt ist, kann daher so gestaltet und/oder im Endmodul 23, mindestens in axialer Richtung, fixiert gehalten sein, dass mit einem korrespondierenden elektrischen Verbinder am Fahrzeug bei der Montage des Endmoduls 23 automatisch eine elektrische Verbindung hergestellt wird. Dies kann auch durch einen sich selbst findenden Direktsteckungsmechanismus erfolgen. Dadurch ergibt sich eine Vereinfachung des Montage- und Demontageprozesses, also auch eine Verbesserung der Servicefreundlichkeit.

Für die Signalleitungen kommen, neben, wie in den Figuren dargestellt, Flachleiterbandleitungen 22, wo mehrere Leiter elektrisch voneinander isoliert auf einem Leiterträger untergebracht sind, auch nicht dargestellte flexible Leiterbahnen und/oder hochflexible Kabel in Frage, wobei auch mehrere Leiter elektrisch voneinander isoliert auf einem Leiterträger und auch mehrere Leiterträger mit elektrisch isolierten Leitern miteinander in der Lenkwelle untergebracht sein können, die in axialer Richtung durch die gesamte Lenkwelle geführt sind und an beiden Enden der Lenkwelle aus dieser austreten können. Da die Leitungen 22 in den Endmodulen 23, 24, insbesondere über ihre Steckverbinder 25, fixiert sind und von diesen eines fahrzeugfest und eines lenkradfest ist, das Lenkrad 1 beim Verdrehen die Leitungen 22 also tordiert bzw. auslenkt, werden diese länger gewählt, so dass die Länge der Leitungen 22 zwischen den beiden Endmodulen 23, 24 größer ist als deren Abstand voneinander. Innerhalb der Lenkwelle, in axialer Richtung, können dann die Leitungen als flexible Leiterbahnen und/oder hochflexible Kabel und/oder Flachleiterbandleitungen 22 spiralförmig (Fig. 2-7) und/oder wie nicht dargestellt, gewellt und/oder zieharmonikaförmig und/oder helixförmig und/oder bandförmig und/oder als Einzelkabel ausgeführt sein. Die Figuren 2 bis 4 zeigen jeweils eine vormontierbar gestaltete Baueinheit für eine Lenkeinrichtung für ein Kraftfahrzeug mit einem nicht gezeichneten Lenkrad, das drehfest mit einer nicht gezeichneten durchgehend hohlen Lenkwelle verbunden ist, durch die in axialer Richtung elektrische Leitungen als Flachleiterbandleitungen 22 zur Anbindung lenkradseitiger Ausrüstung geführt sind, wobei die Flachleiterbandleitungen 22 an beiden Enden der Lenkwelle aus dieser über Endmodule 23, 24 austreten und im wesentlichen von einer Schutzeinrichtung umgeben sind, bestehend aus zwei Schutzrohren 30, 31, die in axialer Richtung in ihrer Länge veränderbar sind, durch teleskopartiges Ein- und Ausfahren der beiden, mit jeweils ihrem aneinander angrenzenden Ende ineinander verschiebbar gelagerten Rohre 30, 31. Diese sind in axialer- und in Umfangsrichtung und zwar in axial völlig ausgefahrener Stellung, formschlüssig aneinander festlegbar. Die Figuren 2 und 3 zeigen dazu den Bajonettverschluss 32 als Verdrehsicherung, die die Position der Rohre 30, 31 zueinander und somit die Position des Endmoduls 23 zu der des Weiteren Endmoduls 24 in axialer Richtung ganz ausgefahren und in Verdrehrichtung im Wesentlichen in einer Mittelstellung festlegt. Wie in Figur 3 dargestellt, wird die Verriegelung des Bajonettverschlusses 32 in einer Transportstellung, teleskopisch in axialer Richtung ganz ausgefahren, gesichert durch eine Druckfeder 29, die den Formschluss des Bajonettverschlusses 32, durch Verspannen der beiden Rohre 30, 31 gegeneinander, aufrecht erhält. In Figur 2, die eine Einbaustellung der zentralen Kabeleinheit zeigt, ist der Bajonettverschluss 32 entriegelt und die Druckfeder 29 durch den Einbau in die Lenkwelle mehr zusammengedrückt. So wird mit der Druckkraft der Druckfeder 29 in axialer Richtung die fahrzeugseitige Position des Endmoduls 23 gesichert, dessen Verzahnung 26 durch die Federkraft in der nicht gezeichneten fahrzeugseitigen Gegenverzahnung gehalten wird, bei Aufrechterhaltung der Möglichkeit einer Längenverstellung der nicht gezeichneten Lenkwelle, indem sich die zentrale Kabeleinheit dieser durch teleskopisches Ein- bzw. Ausfahren der Rohre 30, 31 anpasst.

Ebenso dienen in der Ausführungsform nach den Figuren 4 bis 7 axial gerichtete Umfangsnuten 35 am Rohr 30 bzw. eine Rastnocke 33 am Rohr 30, ausgebildet als Rastbund, zusammenwirkend mit einer Rastnase 34 am Rohr 31 in Umfangsrichtung bzw. in axialer Richtung zum Festlegen der Rohre 30, 31 der Schutzeinrichtung aneinander, was die Umfangsrichtung betrifft, auch in einer Mittelstellung, einer Geradeausfahrstellung des Lenkrads, bezogen auf ein Torsionsvermögen der Flachleiterbandleitungen 22 nach links oder nach rechts. So wird der Einbau der Leitungen 22 in einer definierten Mittelstellung gewährleistet, von der aus das Lenkrad zu jeder Seite bis zum Lenkanschlag verdreht werden kann, ohne die Leitungen 22 über die Lebensdauer der Kraftfahrzeugs in ihrer Funktion zu beeinträchtigen. Außerdem entfallen durch diese Verdrehsicherung im Anlieferzustand für die zentrale Kabeleinheit zusätzliche Teile zur Transportsicherung, wie sie im Anlieferumfang von herkömmlichen Wickelfedersystemen erforderlich sind. Die Figuren 4, 6 und 7 zeigen die Transportstellung, die beiden Rohre 30, 31 in axialer Richtung völlig ausgefahren und aneinander fixiert, auch in Umfangsrichtung, während in Figur 5 eine Einbaustellung gezeigt ist, die Rohre 30, 31 axial etwas zusammengeschoben und dadurch in axialer- und in Umfangsrichtung voneinander entriegelt und gegeneinander verschiebbar. Im Betrieb, wenn die Lenksäule axial verstellt wird, kann die zentrale Kabeleinheit nun teleskopieren. Im Crashfall schiebt sich die zentrale Kabeleinheit in gleicher Art und Weise zusammen. Die Demontage der zentralen Kabeleinheit erfolgt, indem das Rohr 31 lenkradseitig aus der Lenksäule in axialer Richtung herausgezogen wird. Die damit einhergehende automatische Verrastung zwischen Rohr 30 und Rohr 31 muss bezüglich der auftretenden Kräfte so ausgelegt sein, dass diese vor einer Entrastung der fahrzeugseitigen Verbindung des Endmoduls 23 stattfindet. Dadurch wird sichergestellt, dass die zentrale Kabeleinheit nicht ohne arretieren der Transportsicherung herausgezogen werden kann. Wenn die Verrastung zwischen Rohr 30 und Rohr 31 stattgefunden hat, ist die Transportsicherung wieder vorhanden und die zentrale Kabeleinheit kann auch aus der fahrzeugseitigen Fixierung am Endmodul 23 herausgezogen werden.

## Patentansprüche

1. Lenkeinrichtung für ein Kraftfahrzeug mit einem Lenkrad (1), das drehfest mit einer durchgehend hohlen Lenkwelle verbunden ist, durch die mindestens ein elektrischer Leiter zur elektrischen Anbindung lenkradseitiger Ausrüstung geführt ist, wobei der Leiter in axialer Richtung durch die gesamte Lenkwelle geführt ist, an beiden Enden der Lenkwelle aus dieser austritt, im Wesentlichen von einer Schutzeinrichtung umgeben ist, am lenkradabgekehrten Ende der Schutzeinrichtung durch ein sich nicht mit der Lenkwelle drehendes Endmodul (23) gehalten wird und am lenkradzugekehrten Ende der Schutzeinrichtung durch ein sich mit der Lenkwelle mit drehendes, weiteres Endmodul (24) gehalten wird, **dadurch gekennzeichnet, dass** die Schutzeinrichtung in ihrer Länge durch teleskopartiges Ein- und Ausfahren veränderbar ist, indem sie aus einem äußeren- (31) und einem inneren (30) zweier teleskopartig, mit jeweils ihrem aneinander angrenzenden Ende, in axialer Richtung ineinander verschiebbar gelagerten Schutzrohren (30, 31) besteht und dass, die Rohre (30, 31) der Schutzeinrichtung in axialer und in Umfangsrichtung, reib- und/oder formschlüssig aneinander festlegbar sind.

2. Lenkeinrichtung nach Anspruch 1, **dadurch gekennzeichnet, dass** die Rohre (30, 31) der Schutzeinrichtung in axial völlig ausgefahrener Stellung aneinander festlegbar sind.

3. Lenkeinrichtung nach einem der Ansprüche 1 oder 2, **dadurch gekennzeichnet, dass** die Rohre (30, 31) der Schutzeinrichtung durch einen Bajonettverschluss (32) aneinander festlegbar sind.

4. Lenkeinrichtung nach einem der Ansprüche 1 bis 3, **dadurch gekennzeichnet, dass** die Rohre (30, 31) der Schutzeinrichtung durch axial gerichtete Umfangsnuten (35) bzw. eine Rastnocke (33) am inneren Rohr (30) zusammenwirkend mit einer Rastnase (34) am äußeren Rohr (31) in Umfangsrichtung bzw. in axialer Richtung aneinander festlegbar sind.

5. Lenkeinrichtung nach einem der Ansprüche 1 bis 4, **dadurch gekennzeichnet, dass** die reib- und/oder formschlüssige Verbindung der Rohre (30, 31) der Schutzeinrichtung manuell lösbar ist, mindestens von einem lenkradseitigen Ende eines Rohres (30, 31) aus.

6. Lenkeinrichtung nach einem der Ansprüche 1 bis 5, **dadurch gekennzeichnet, dass** an wenigstens einem Ende des Leiters, insbesondere an seinem lenkradabgekehrten Ende, ein elektrischer Verbinder (25) befestigt ist, der so gestaltet ist und/oder in einem der Endmodule (23, 24), mindestens in axialer Richtung fixiert, gehalten wird, dass mit einem mit diesem korrespondierenden elektrischen Verbinder am Fahrzeug bei der Montage des Endmoduls (23, 24) automatisch eine elektrische Verbindung hergestellt wird.

7. Lenkeinrichtung nach einem der Ansprüche 1 bis 6, **dadurch gekennzeichnet, dass** mehrere Leiter elektrisch voneinander isoliert auf einem Leiterträger untergebracht sind.

8. Lenkeinrichtung nach einem der Ansprüche 1 bis 7, **dadurch gekennzeichnet, dass** der elektrische Leiter aus einer flexiblen Leiterbahn und/oder hochflexiblen Kabeln und/oder Flachteiterbandleitungen (22) besteht.

9. Lenkeinrichtung nach einem der vorangegangenen Ansprüche, **dadurch gekennzeichnet, dass** die Länge des Leiters zwischen den beiden Endmodulen (23, 24) größer ist als deren Abstand voneinander.

10. Lenkeinrichtung nach einem der vorangegangenen Ansprüche, **dadurch gekennzeichnet, dass** diese keine mechanische Triebverbindung zwischen dem Lenkrad (1) und einem Lenkgetriebe (2) aufweist.

11. Lenkeinrichtung nach Anspruch 10, **dadurch gekennzeichnet, dass** das Lenkgetriebe (2) von einem mit Ausgangssignalen aus der Lenkradbetätigung angesteuerten Aktuator (3) beaufschlagt wird.

12. Lenkeinrichtung nach einem der Ansprüche 10 oder 11, **dadurch gekennzeichnet, dass** das Lenkgetriebe (2) an eine Hydraulik-Stelleinheit (4) gekoppelt ist, die von einer vom Lenkrad (1) gesteuerten Hydraulik-Förderdereinheit (5) beaufschlagt wird und über eine im Hydraulikkreis (6) einschaltbare hydraulische Verbindung zwischen der Hydraulik-Fördereinheit (5) und der Hydraulik-Stelleinheit (4) eine Rückfallebene zur Lenkungsbetätigung bei Ausfall des Aktuators (3) bildet.

13. Lenkeinrichtung nach einem der vorhergehenden Ansprüche, **dadurch gekennzeichnet, dass** eine Baueinheit, wenigstens bestehend aus Endmodule (23), weiterem Endmodul (24), Schutzeinrichtung und Leiter, insbesondere noch mit Steckverbinder (20, 21, 25), vormontierbar gestaltet ist.

14. Lenkeinrichtung nach Anspruch 13, **dadurch gekennzeichnet, dass** bei der vormontierten Baueinheit die beiden Rohre (30, 31) in Umfangsrichtung so zueinander festlegbar sind, dass die Position des Endmoduls (23) zu der des weiteren Endmoduls (24) in einer Mittelstellung, insbesondere einer Geradeausfahrstellung des Lenkrads, festgelegt ist, bezogen auf ein Torsionsvermögen des Leiters in beide Richtungen.

15. Verfahren zur elektrischen Anbindung lenkradseitiger elektrischer Ausrüstung in einer Lenkeinrichtung eines Kraftfahrzeugs, insbesondere nach einem der Ansprüche 1 bis 17, mit einer durchgehend hohlen Lenkwelle, durch die mindestens ein elektrischer Leiter geführt ist, insbesondere eine flexible Leiterbahn und/oder hochflexible Kabel und/oder Flachleiterbandleitungen (22), in einer vormontierten Baueinheit, wenigstens bestehend aus einem Endmodul (23), einem weiteren Endmodule (24), dem Leiter mit elektrischen Verbindern und einer die Endmodule (23, 24) verbindenden, aus zwei in axialer Richtung teleskopisch ineinander einschiebbaren, durch eine Verdreh- und Verschiebesicherung aneinander festgelegten Rohren (30, 31) bestehenden Schutzeinrichtung, **gekennzeichnet durch** mindestens folgende Montageschritte:
- Einführen der vormontierten Baueinheit mit aneinander festgelegten Rohren (30, 31) in axialer Richtung in die hohle Lenkwelle bis das Endmodul (23) **durch** Formschluss fahrzeugfest platziert ist,
- lösen der Verdreh- und Verschiebesicherung zwischen den beiden Rohren (30, 31) der Schutzeinrichtung,
- teleskopisches Zusammenschieben der beiden Rohre (30, 31) der Schutzeinrichtung bis auf Anschlag am Lenkradboden und lenkradfestes Festlegen des weiteren Endmoduls (24),
- elektrisches Kontaktieren der elektrischen Verbinder mit ihren korrespondierenden Anschlüssen.

16. Verfahren nach Anspruch 18, **dadurch gekennzeichnet, dass** die elektrischen Verbinder am Fahrzeug zu den korrespondierenden elektrischen Verbindern (25) am Endmodul (23) der vormontierten Baueinheit so ausgerichtet festgelegt sind, dass deren elektrische Verbindung zeitgleich mit der Herstellung des Formschlusses am Endmodul (23) automatisch beim Einführen der vormontierten Baueinheit in die hohle Lenkwelle hergestellt wird.

## Claims

1. A steering device for a motor vehicle with a steering wheel (1), which is non-rotatably connected to a continuously hollow steering shaft, through which at least one electric conductor is guided for the electric connection of equipment on the steering wheel side, wherein the conductor is guided in the axial direction through the entire steering shaft, exits the steering shaft at the two ends thereof, is substantially surrounded by a protective device, is held at the end of the protective device remote from the steering wheel by an end module (23) that does not rotate with the steering shaft and is held at the end of the protective device facing the steering wheel by a further end module (24) that rotates with the steering shaft, **characterised in that** the length of the protective device can be varied by telescopic retraction and extension, **in that** it comprises an outer one (31) and an inner one (30) of two protective tubes (30, 31), which are mounted so as to be telescopically displaceable into one another in the axial direction with their respective mutually adjacent end and **in that** the tubes (30, 31) of the protective device can be fixed on one another in a frictional and/or interlocking manner in the axial and peripheral directions.

2. A steering device according to claim 1, **characterised in that** the tubes (30, 31) of the protective device can be fixed on one another in the axially completely extended position.

3. A steering device according to either of claims 1 or 2, **characterised in that** the tubes (30, 31) of the protective device can be fixed on one another by a bayonet closure (32).

4. A steering device according to any one of claims 1 to 3, **characterised in that** the tubes (30, 31) of the protective device can be fixed on one another in the peripheral direction or in the axial direction by axially directed peripheral grooves (35) or a latching cam (33) on the inner tube (30) in cooperation with a latching lug (34) on the outer tube (31).

5. A steering device according to any one of claims 1 to 4, **characterised in that** the frictional and/or interlocking connection of the tubes (30, 31) of the protective device can be manually released, at least from an end on the steering wheel side of a tube (30, 31).

6. A steering device according to any one of claims 1 to 5, **characterised in that** an electric connector (25) is fastened on at least one end of the conductor, more especially on its end remote from the steering wheel, said electric connector being configured in such a way and/or held in one of the end modules (23, 24), at least fixed in the axial direction, such that an electric connection is automatically produced to an electric connector corresponding thereto on the vehicle during the assembly of the end module (23, 24).

7. A steering device according to any one of claims 1 to 6, **characterised in that** a plurality of conductors are accommodated on a conductor carrier so as to be electrically insulated from one another.

8. A steering device according to any one of claims 1 to 7, **characterised in that** the electric conductor comprises a flexible conductor path and/or highly flexible cables and/or flat conductor strip lines (22).

9. A steering device according to any one of the preceding claims, **characterised in that** the length of the conductor between the two end modules (23, 24) is greater than their distance from one another.

10. A steering device according to any one of the preceding claims, **characterised in that** the latter has no mechanical drive connection between the steering wheel (1) and a steering transmission (2).

11. A steering device according to claim 10, **characterised in that** the steering transmission (2) is acted upon by an actuator (3) activated by output signals from the steering wheel actuation.

12. A steering device according to either of claims 10 or 11, **characterised in that** the steering transmission (2) is coupled to a hydraulic actuating unit (4), which is acted upon by a hydraulic conveying unit (5) controlled from the steering wheel (1) and forms a fallback solution for steering actuation if the actuator (3) fails by means of a hydraulic connection, which can be switched on in the hydraulic circuit (6), between the hydraulic conveying unit (5) and the hydraulic actuating unit (4).

13. A steering device according to any one of the preceding claims, **characterised in that** a structural unit, at least comprising an end module (23), a further end module (24), a protective device and a conductor, is configured to be preassembled, more especially also with plug connectors (20, 21, 25).

14. A steering device according to claim 13, **characterised in that** in the preassembled structural unit, the two tubes (30, 31) can be fixed with respect to one another in the peripheral direction in such a way that the position of the end module (23) is fixed with respect to that of the further end module (24) in a centre position, more especially in a straight ahead driving position of the steering wheel, in relation to a torsional ability of the conductor in the two directions.

15. A method for the electric connection of electric equipment on the steering wheel side in a steering device of a motor vehicle, more especially according to any one of claims 1 to 17, with a continuously hollow steering shaft, through which at least one electric conductor is guided, more especially a flexible conductor path and/or highly flexible cables and/or flat conductor strip lines (22), in a preassembled structural unit, at least comprising an end module (23), a further end module (24), the conductor with electric connectors and a protective device connecting the end modules (23, 24) and comprising two tubes (30, 31), which can be telescopically pushed into one another in the axial direction and are fixed to one another by a rotation and displacement securing mechanism, **characterised by** at least the following assembly steps:
- introducing the preassembled structural unit with tubes (30, 31) fixed to one another in the axial direction into the hollow steering shaft until the end module (23) is placed so as to be secured to the vehicle by an interlocking fit,
- releasing the rotation and displacement securing mechanism between the two tubes (30, 31) of the protective device,
- telescopically pushing the two tubes (30, 31) of the protective device together up to a stop on the steering wheel base and fixing the further end module (24) so as to be secured to the steering wheel,
- electrically contacting the electric connectors with their corresponding terminals.

16. A method according to claim 15, **characterised in that** the electric connectors are fixed on the vehicle aligned with the corresponding electric connectors (25) on the end module (23) of the preassembled structural unit in such a way that their electric connection is automatically produced on introduction of the preassembled structural unit into the hollow steering shaft simultaneously with the production of the interlocking fit on the end module (23).

## Revendications

1. Dispositif de direction pour un véhicule automobile comprenant un volant de direction (1) qui est relié solidairement en rotation à un arbre de direction creux de bout en bout au travers duquel est guidé au moins un conducteur électrique pour permettre la liaison électrique d'un équipement situé côté volant, ce conducteur étant guidé en direction axiale sur la totalité de l'arbre de direction, sortant de cet arbre à ses deux extrémités, étant essentiellement entouré par un dispositif de protection, et étant maintenu à l'extrémité du dispositif de protection située à l'opposé du volant par un module d'extrémité (23) non solidaire du volant en rotation, et à l'extrémité du dispositif de protection située côté volant par un autre module d'extrémité (24) solidaire du volant en rotation,
**caractérisé en ce que**
la longueur du dispositif de protection peut être modifiée par déploiement ou rétraction télescopique, dans la mesure où ce dispositif est constitué par un tube de protection externe (31) et un tube de protection interne (30) parmi deux tubes de protection (30, 31) télescopiques montés coulissants l'un dans l'autre en direction axiale par leurs extrémités contigües, et les tubes (30, 31) du dispositif de protection peuvent être fixés l'un à l'autre en direction axiale et en direction périphérique par une liaison par fiction et/ou par la forme.

2. Dispositif de direction conforme à la revendication 1,
**caractérisé en ce que**
les tubes (30, 31) du dispositif de protection peuvent être fixés l'un à l'autre dans la position totalement déployée axialement.

3. Dispositif de direction conforme à l'une des revendications 1 et 2,
**caractérisé en ce que**
Les tubes (30, 31) du dispositif de protection peuvent être fixés l'un à l'autre par un élément de fermeture à bâillonnent (32).

4. Dispositif de direction conforme à l'une des revendications 1 à 3,
**caractérisé en ce que**
les tubes (30, 31) du dispositif de protection peuvent être fixés l'un à l'autre en direction périphérique ou en direction axiale par des rainures périphériques dirigées axialement (35) ou une came d'enclipsage (33) située(s) sur le tube interne (30), et coopérant avec un bec d'enclipsage (34) situé sur le tube externe (31).

5. Dispositif de direction conforme à l'une des revendications 1 à 4,
**caractérisé en ce que**
la liaison par friction et/ou par la forme des tubes (30, 31) du dispositif de protection peut être relâchée manuellement au moins à partir d'une extrémité située côté volant d'un tube (30, 31).

6. Dispositif de direction conforme à l'une des revendications 1 à 5,
**caractérisé en ce que**,
sur au moins une extrémité du conducteur, en particulier à son extrémité située à l'opposé du volant est fixé un élément de connexion électrique (25) qui est conformé, et/ou maintenu fixé dans l'un des modules d'extrémité (23, 24) au moins en direction axiale, de façon à obtenir automatiquement une connexion électrique avec un élément de connexion électrique correspondant à celui-là sur le véhicule, lors du montage du module d'extrémité (23, 24).

7. Dispositif de direction conforme à l'une des revendications 1 à 6,
**caractérisé en ce que**
plusieurs conducteurs électriques isolés les uns les autres sont montés sur un support de conducteurs.

8. Dispositif de direction conforme à l'une des revendications 1 à 7,
**caractérisé en ce que**
le conducteur électrique est constitué par une piste conductrice flexible et/ou par des câbles très flexibles et/ou par des conducteurs à bande conductrice plate (22).

9. Dispositif de direction conforme à l'une des revendications précédentes,
**caractérisé en ce que**
la longueur du conducteur entre les deux modules d'extrémité (23, 24) est supérieure à leur distance l'un de l'autre.

10. Dispositif de direction conforme à l'une des revendications précédentes,
**caractérisé en ce qu'**
il ne comporte pas de liaison motrice entre le volant (1) et une transmission de direction (2).

11. Dispositif de direction conforme à la revendication 10,
**caractérisé en ce que**
la transmission de direction (2) est sollicitée par un actionneur (3) commandé par des signaux de sortie provenant de l'actionnement du volant.

12. Dispositif de direction conforme à l'une des revendications 10 et 11,
**caractérisé en ce que**
la transmission de direction (2) est accouplée à une unité de réglage hydraulique (4) qui est alimentée par une unité de refoulement hydraulique (5) commandée par le volant (1), et, forme, par l'intermédiaire d'une liaison hydraulique pouvant être branchée dans le circuit hydraulique (6), entre l'unité de refoulement hydraulique (5) et l'unité de réglage hydraulique (4) un moyen palliatif pour l'actionnement de la direction en cas de défaillance de l'actionneur (3).

13. Dispositif de direction conforme à l'une des revendications précédentes,
**caractérisé en ce que**
une unité constituée au moins du module d'extrémité (23) de l'autre module d'extrémité (24), du dispositif de protection et du conducteur en particulier encore d'éléments de liaison par enfichage (20, 21, 25) est réalisée sous la forme d'une unité pré-montable.

14. Dispositif de direction conforme à la revendication 13,
**caractérisé en ce que**
dans l'unité pré-montée, les deux tubes (30, 31) peuvent être fixés l'un sur l'autre en direction périphérique de sorte que la position du module d'extrémité (23) par rapport à celle de l'autre module d'extrémité (24) soit fixée dans une position médiane, en particulier une position de déploiement rectiligne du volant par rapport à une possibilité de torsion du conducteur dans les deux directions.

15. Procédé de connexion électrique d'un équipement électrique situé côté volant dans un dispositif de direction d'un véhicule automobile, en particulier conforme à l'une des revendications 1 à 17 comportant un arbre de direction creux de bout en bout, au travers duquel est guidé au moins un conducteur électrique, en particulier une piste conductrice flexible et/ou des câbles très flexibles et/ou des conducteurs à bande conductrice plate (22), dans une unité pré-montée, constituée au moins d'un module d'extrémité (23) d'un autre module d'extrémité (24) du conducteur avec des éléments de connexion électriques et d'un dispositif de protection reliant les modules d'extrémité (23, 24), et constitué par deux tubes (30, 31) coulissant télescopiquement l'un dans l'autre en direction axiale, et fixés l'un à l'autre par un élément de protection anti-rotation et anti-coulissement,
**caractérisé par**
au moins les étapes de montage suivantes :
- introduction de l'unité pré-montée avec les tubes (30, 31) fixés l'un à l'autre en direction axiale dans l'arbre de direction creux jusqu'à ce que le module d'extrémité (23) soit positionné solidairement au véhicule par une liaison par la forme,
- relâchement de l'élément de sécurité anti-rotation et anti-coulissement entre les deux tubes (30, 31) du dispositif de protection,
- coulissement l'un dans l'autre des deux tubes (30, 31) du dispositif de protection jusqu'à ce qu'ils viennent en butée contre le corps du volant et fixation solidairement au volant de l'autre module d'extrémité (24),
- mise en contact électrique des éléments de connexion électrique avec leurs bornes de connexion correspondantes.

16. Procédé conforme à la revendication 18,
**caractérisé en ce que** les éléments de connexion électrique situés sur le véhicule sont fixés aux éléments de connexion électrique (25) correspondants situés sur le module d'extrémité (23) de l'unité pré-montée en étant orientés de sorte que leur connexion électrique soit obtenue automatiquement en même temps que l'obtention de la liaison par la forme sur le module d'extrémité (23) par introduction de l'unité pré-montée dans l'arbre de direction creux.
